# EUROPEAN PATENT APPLICATION

(11) **EP 4 358 032 A1**
(43) Date of publication of application: **24.04.2024**
(21) Application number: 22315243.0
(22) Date of filing: 19.10.2022
(51) Int. Cl.: G06V 10/60, G06V 10/56

(54) **METHOD OF GENERATING A PERSONALIZED OUTPUT IMAGE FOR A SECURITY DOCUMENT**

(71) Applicant: HID Global CID SAS, 92150 Suresnes (FR); BE IP - Association n° 652, 69603 Villeurbanne Cedex (FR); HID CID LIMITED, Basingstoke RG24 8YB (GB)
(72) Inventor: Dalloz, Nicolas, 92150 Suresnes Cedex (FR); Dhillon, Baljeet, Wigston, LE18 3YT (GB)
(74) Representative: Kramer Barske Schmidtchen Patentanwälte PartG mbB

(57) **Abstract**

A method of generating a personalized output image for a security document includes obtaining image information of a first image (16) formed on one side of a page of the security document (10), and a personalized input image showing a portrait of a holder of the security document (10). On the basis of the two images, a personalized output image (15) is calculated such that, when the personalized output image (15) and the first image (16) are viewed in transmission, the portrait of the holder of the security document appears. It is particularly advantageous to use a camouflage pattern, a broken-line pattern or a random pixel pattern as the first image (16) in order to obscure the portrait of the holder as much as possible.

## Description

### Technical Field

The present disclosure generally relates to printing techniques, in particular, to a method of generating a personalized output image for a security document.

### Background

Generally, security documents such as a passport or another identifying document, a checkbook, a bank card or the like include at least one page including personalized data and one or more security features. For example, conventional security booklets such as passports comprise a cover foldable about an axis, a set of page sheets, and a page that is provided with personalized data relating to the holder of the security booklet. Such security booklets may be difficult to tamper with because of the way in which the page sheets are stitched together and secured to the cover. Further, the personalized data page may carry biometric information, a personalized portrait and the like, which may also be encrypted and/or secured. Nevertheless, a determined forger may be able to tamper with a genuine security booklet, in particular, by manipulating the personalized data and/or the encrypted information.

One example for a security booklet is disclosed in WO 2015/145158 A1.

The present disclosure is directed, at least in part, to improving or overcoming one or more aspects of prior systems.

### Summary of the Disclosure

According to one aspect of the present disclosure, a method of generating a personalized output image for a security document including at least one page, the at least one page having a first side and an opposite second side, comprises acquiring image information of a first image formed or to be formed on one of the first side and the second side of the at least one page. The method further comprises determining at least one first color value of each of a first plurality of pixels in the first image, receiving a personalized input image, and performing a registration between the personalized input image and the first image. The method further comprises determining at least one second color value of each of a second plurality of pixels in the personalized input image, positions of the second plurality of pixels in the personalized input image corresponding to positions of the first plurality of pixels in the first image. In a final step, the method comprises calculating at least one third color value of each of a third plurality of pixels in the personalized output image based on corresponding ones of the at least one first color values and the at least one second color values, such that the personalized output image, when formed on and viewed in transmission from the other one of the first side and the second side of the at least one page in registration with the first image resembles the personalized input image. Preferably, the first image is a fixed image, i.e., an image that is the same for each of a plurality of security documents of the same type, in contrast to a personalized image that is different for each of the plurality of security documents.

In another aspect, the present disclosure relates to a security document comprising at least one page having a first side and a second side, a first, preferably fixed image formed on one of the first side and the second side, and a personalized image generated in accordance with the above aspect, formed on the other one of the first side and the second side.

In another aspect, the present disclosure relates to a printing apparatus, preferably an ink printing apparatus, comprising a printing unit and a control unit configured to perform the method of the above aspect, wherein the control unit is further configured to control the printing unit to print the generated personalized output image and, optionally, the first image in registration with each other.

Other features and aspects of the present disclosure will be apparent from the following description and the accompanying drawings.

### Brief Description of the Drawings

Fig. 1 shows a schematic cross-section of a security document including a personalized output image in accordance with the present disclosure;
Fig. 2 shows examples of a first image, a personalized input image, and a personalized output image in accordance with the present disclosure;
Fig. 3 shows other examples of a first image, a personalized input image, and a personalized output image in accordance with the present disclosure;
Fig. 4 shows yet another example of a first image, a personalized input image, and a personalized output image in accordance with the present disclosure;
Fig. 5 shows a further example of a first image, a personalized input image, and a personalized output image in accordance with the present disclosure;
Fig. 6 shows one example of a color gamut for a first image and a personalized input image in accordance with the present disclosure;
Fig. 7 shows another example of a color gamut for a first image and a personalized input image that are independent from each other; and
Fig. 8 shows a schematic overview of a printing apparatus in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that the portrait of a holder is one of the most crucial elements in a security document such as a passport. Accordingly, securing this portrait is of utmost importance. One of the commonly used locations of the portrait, for example, a secondary portrait that replicates a primary portrait of the holder, is on page 3 of a passport. However, as this page is usually made of paper, it does not provide the same choice of security features that are available on other substrates, for example, polycarbonates or the like. Therefore, it has been realized that other ways of securing a secondary portrait, for example, on page 3 of a passport have to be designed.

According to the present disclosure, the above is achieved by using a kind of see-through register, where at least one of the two images on the front and on the back of the page is personalized such that, when both images are seen in register in transmitted light, a third personalized image can be seen. For example, on passports, a first (for example, fixed, i.e., being the same for each passport) image can be printed on page 3, and a personalized image can be printed in registration on page 4, such that, when page 3 and page 4 are observed simultaneously in transmitted light (for example, by being held against a light source), the portrait of the holder, which is at least partially obscured when the page is viewed under reflection, appears as a complete portrait.

In an alternative also contemplated herein, the personalized image is printed on page 3 (for example, by inkjet printing), and the first image is printed on page 4 (for example, using offset printing). Here, it has been realized that the portrait of the holder should be as concealed as possible in the personalized image that is viewed under reflection. It has been realized that the visibility of the portrait in the image to be printed, for example, on page 3, depends on the design of the first image. In this respect, it has been realized that specific designs for the first image can be implemented in an advantageous manner to conceal the portrait. For example, a camouflage pattern or a random pixel pattern can be used.

It is important to realize that, when a printed image is observed in transmission, the inks used to form the image create color by absorption of light. In particular, when a duplex print (commonly known as recto/verso print) is observed in transmission, light is absorbed by the ink on both sides of the sheet. In particular, when the paper or other material of the sheet is highly diffusive, and the ink quantities are not too high or too low, the color seen in transmission can be considered as equivalent to an addition of the ink quantities on each side. For example, if cᵣ, mᵣ, yᵣ are the ink quantities of the commonly used colors cyan, magenta and yellow on the recto side, and cᵥ, mᵥ, yᵥ are the ink quantities on the verso side, the transmission image is perceived as an image with equivalent ink quantities c_{T}, m_{T}, y_{T} that are the respective sums of the ink quantities on the recto side and on the verso side.

In accordance with the present disclosure, the desired image that is seen in transmission is the image of the document holder, and the image printed on the recto side (or the verso side) is usually predetermined. Using the above approximations, it has been realized that the ink quantities to be printed on the verso side (or the recto side) have to be calculated such that they compensate the ink quantities of the predetermined image on the opposite side when viewed in transmission. In this respect, generally, ink quantities can vary between a lower limit of 0% and an upper limit of 100% on each side. Therefore, in order to be able to design the images independently, it has been realized that the available gamut for the transmitted image depends on the range of colors in the predetermined image. For example, when the ink quantity for the cyan ink in the predetermined image varies between 0% and X%, the minimum obtainable total ink quantity (intensity) of the cyan ink in the transmitted image that can be guaranteed at each point is X%. Likewise, in order for the images to be independent, the maximum obtainable ink quantity for the transmitted image is 100% plus the minimum ink amount of the predetermined image. In other words, the contrast of the predetermined image has an effect on the contrast that can be obtained for the transmitted image. In addition, if the personalized image that is to be printed has a larger contrast range than that which is obtainable for a given predetermined image, a gamut mapping has to be performed in order to be able to print the personalized image using the available gamut.

It has also been realized that the security of the personalized image can be further enhanced when there is a third layer or image that also includes one or more inks. Also in this case, the total amount of the individual inks that determines the color that is obtained for the transmitted image depends on the sum of the inks in the different layers (for example, on page 4 and page 3, as well as in an intermediate layer between said pages, or a further layer covering one of said pages). In particular, if the third image is embedded inside a sheet of a security document, it is very difficult to forge said document, because knowledge of this hidden image is necessary in order to be able to successfully calculate the ink amounts to be printed on, for example, the verso side in order to obtain the desired image. It has also been realized that a watermark that is formed in the sheet of the security document can also be advantageously used to achieve this effect.

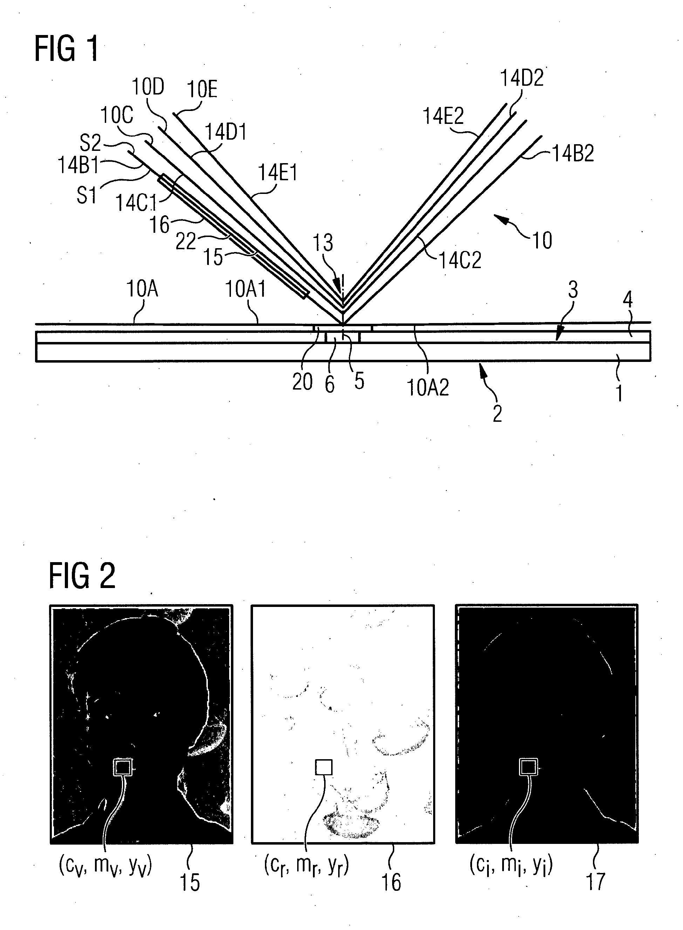

Fig. 1 shows a schematic cross-section of an exemplary security document 10 including a personalized output image 15 in accordance with the present disclosure. In Fig. 1, an exemplary passport comprises a cover 1, for example, a durable paper cover, having outer and inner surfaces 2, 3. Outer surface 2 is decorated with indicia (not shown) relevant to the issuing authority in a conventional manner, while surface 3 provides a layer onto which additional substrates or layers can be bonded. In the present example, surface 3 may have a Teslin inlay 4 bonded to the same, and this inlay may optionally include an embedded antenna and chip (not shown).

Cover 1 may be foldable about an axis 5, and inlay 4 may be provided with a gap 6 extending along axis 5 to enable folding. However, gap 6 is not essential.

Secured to cover 1, on its inner side, is a stitched set of page sheets defining a book block. Individual page sheets are indicated as 10A-10E. Sheets 10A-10E are stitched together along axis 5 using a thread 13 shown schematically in Fig. 1. For example, each page sheet 10A-10E may be formed as a single, fibrous sheet having a uniform thickness of less than 200 microns. In a preferred example, each page sheet may be formed of paper. However, it will be appreciated that, in other embodiments, other appropriate materials that have the desired optical properties (in particular, diffusiveness) can be used, for example, plastics such as polycarbonate, or polypropylene.

Page sheets 10B-10E have a similar size, and when folded about axis 5, they define respective pairs of pages 14B1, 14B2, 14C1, 14C2 etc., each page having a first side S1 and an opposite second side S2. In some embodiments, page sheet 10A may be smaller than page sheets 10B-10E, and may include a first page 10A1 adhered to cover 1 via inlay 4 to form an end page, and a tab section 10A2 extending through axis 5. A reinforcing spine tape 20, for example, made of paper, woven synthetic or natural fabric extends along axis 5 and is adhered on one side to inlay 4 and on the other side to an underside of tab section 10A2. However, it will be appreciated that tape 20 can also be omitted.

Page 14B1 defined by page sheet 10B is a personalized page sheet that is provided with personalized data and/or biometric data relating to the holder of the passport. For example, the personalized data or biometric data relating to the holder of the passport may be provided on first side S1 of page 14B1, together with a first image 16 (in the present embodiment, first image 16 is a fixed image that is the same for each security document; it will be appreciated that, in some embodiments, image 16 can also be a variable and/or personalized image that is different for each security document) that will be described in more detail below. On the opposite side S2 of page 14B1, a personalized image, which in the following will be referred to as personalized output image 15, is formed in registration with first image 16. As will be described in more detail below, personalized output image 15 is generated in such a manner that, when images 15, 16 are viewed in transmission, for example, from second side S2, a (secondary) portrait of the holder of the security document can be seen. Here, it will be readily appreciated that an opposite arrangement, where image 16 is formed on second side S2, and personalized output image 15 is formed on first side S1, can also be used.

First image 16 may be formed on first side S1 or second side S2 of page 14B1 in any appropriate manner, for example, by offset printing or inkjet printing. As already explained above, generally, when inks are used for printing images such as first image 16, it is the ink amounts of the individual inks that determine color and contrast of the image. In the following, an example will be described where the commonly used CMY (or CMYK) color space and the respective inks are used to generate or print color images. However, the skilled person will immediately recognize that the concept disclosed herein can also be used with other inks or color spaces, for which the color that is seen when images are viewed, for example, in transmission, depends on the ink amounts associated with the respective ink colors.

In the following, an exemplary method of generating personalized output image 15 on the basis of a first image 16 will be described with reference to Figs. 1 and 2. As previously mentioned, first image 16 is a given image that is either formed on page 14B1 during manufacture of security document 10, or is to be formed on the same when personalizing security document 10. As such, first image 16 includes image information, in particular, a plurality of image elements or pixels, each image element or pixel having at least one first color value. While in case of monochrome images the at least one first color value is a single color value, in the present example, the case where the at least one first color value includes three color values cᵣ, mᵣ, yᵣ, each representing the amount of cyan, magenta and yellow, respectively, will be considered.

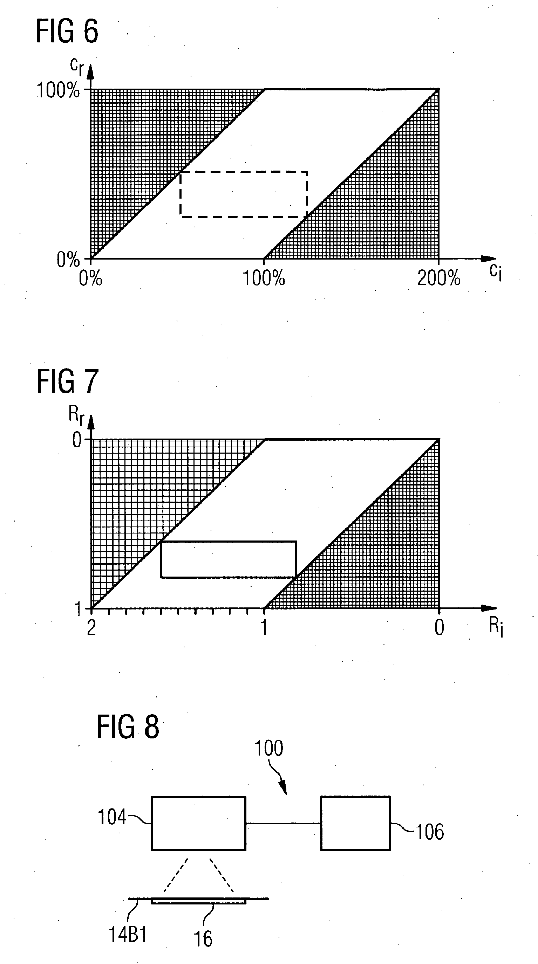

In a first step, the image information of first image 16 is acquired. For example, said image information may be stored in a memory of a printing apparatus 100 (see Fig. 8) that is used to print personalized output image 15 and, optionally, first image 16, or it may be stored in any other location from which it can be retrieved by the apparatus or computer system that calculates personalized output image 15.

Based on the acquired image information, the at least one first color values of each of a first plurality of pixels in first image 16 are determined. Here, it will be appreciated that the at least one first color values can be determined for all pixels in first image 16, or for a subset or portion of first image 16 that is to be used in order to obtain personalized output image 15. In other words, it may not be necessary that first image 16 is used to completely obscure the portrait of the holder of security document 10, but only part of it may be used to obscure said portrait.

Next, a personalized input image 17, for example, the portrait of the holder of security document 10, is received. For example, personalized input image 17 may also be read from the above-described memory. Further, a registration between personalized input image 17 and first image 16 is performed. In other words, personalized input image 17 and/or first image 16 are processed, if necessary, such that they have the same size or resolution, i.e., contain the same number of pixels. In this manner, a one to one correspondence between each pixel in first image 16 and each pixel in personalized input image 17 can be obtained.

In a next step, at least one second color value cᵢ, mᵢ, y; of each of a second plurality of pixels in personalized input image 17 is determined. Here, positions of the second plurality of pixels in personalized input image 17 correspond to positions of the first plurality of pixels in first image 16. Once the at least one first color value cᵣ, mᵣ, yᵣ and the at least one second color value cᵢ, mᵢ, y; for all pixels are known, at least one third color value cᵥ, mᵥ, yᵥ of each of a . third plurality of pixels in personalized output image 15 can be calculated based on corresponding ones of the at least one first color values and the at least one second color values. This calculation is performed in such a manner that personalized output image 15, when formed on and viewed in transmission from the other one of first side S1 and second side S2 of at least one page 14B1 in registration with first image 16, resembles personalized input image 17. As described above, in one example, this calculation is performed by subtracting the corresponding at least one first color value cᵣ, mᵣ, yᵣ from the corresponding at least one second color value cᵢ, mᵢ, yᵢ in order to obtain the at least one third color value cᵥ, mᵥ, yᵥ. Here, it will be appreciated that this calculation can be performed independently for each of the inks. Therefore, for ease of illustration, in the following, the case of only one ink (here, cyan) will be described in more detail.

For example, if the amount of cyan ink for a given pixel in first image 16 is cᵣ (with the amount varying between 0% and 100%), and the corresponding ink amount for personalized input image 17 is cᵢ, the ink amount in personalized output image 15 is calculated as cᵢ - cᵣ. In this manner, when first image 16 and personalized output image 15 are viewed in transmission, the perceived color for said pixel is the sum of cᵣ and cᵥ, i.e., the value cᵢ in the personalized input image 17, which is the portrait of the holder that should be made recognizable when images 15 and 16 are viewed in registration with each other in transmission.

As mentioned above, first image 16 may be the same for all security documents 10. On the other hand, it will be appreciated that the properties of personalized input image 17 vary widely from person to person. Therefore, in order to assure that the above-mentioned effect of obscuring personalized input image 17, and making the same visible when viewing first image 16 and personalized output image 15 in registration with each other, can be achieved, it may be necessary to adjust the color gamut of personalized input image 17 such that, for each pixel, it is possible to achieve the desired value in personalized output image 15. For example, if the color gamut in first image 16 (i.e., the amount of ink that is used for the pixels in said image) is between 0% and 30%, it is evident that it cannot be guaranteed for each pixel of the transmitted image that a total value of less than 30% can be achieved from the combination of first image 16 and personalized output image 15.

Accordingly, the method may comprise a further step of acquiring a first maximum color value of the at least one first color values in first image 16, and determining a color value range for the at least one third color values in personalized output image 15 by setting a lower limit of the color value range to the first maximum color value. Accordingly, the at least one second color values in personalized input image 17 may be determined by mapping color values of personalized input image 17 (i.e., original color values of the same) onto the determined color value range. In this manner, a kind of gamut mapping is performed for personalized input image 17, which gamut mapping depends on the ink amounts in first image 16. This will be described in more detail below.

In view of the above, it will also be appreciated that the available gamut is also affected by the minimum color value of the at least one first color values in first image 16. In other words, if the color values in first image 16 are all greater than, for example, 10%, and the images should be independent from each other, the maximum total color value that can be guaranteed for personalized output image 15 is 110%. Therefore, the method may further comprise a step of determining a first minimum color value of the at least one first color values in first image 16, and a step of setting an upper limit of the color value range to a sum of the first minimum color value and a maximum obtainable color value or ink amount (i.e., 100%) for personalized output image 15. Here, it should be mentioned that the obtainable color values for each ink may also sometimes be referred to as ink coverage, as is well-known to the skilled person in the field of color printing. This color value or ink coverage varies between 0% and 100% for each image on each side of page 14B1 in the usual manner. As such, it will be appreciated that first image 16 and personalized output image 15, in the present example, are formed by printing using at least one ink, and that the at least one first color value and the at least one third color value are related to at least one ink amount of the at least one ink. As previously mentioned, the at least one ink amount is between a minimum ink amount of 0% and a maximum ink amount or coverage of 100%. In particular, the at least one first color value and the at least one third color value may represent the at least one ink amount of the at least one ink to be used for printing.

In the above example, the CMY color space was used to describe the printing process. However, it will be appreciated that, for example, first image 16 and/or personalized input image 17 may first be obtained in a different color space, for example, RGB or CIELAB, or a spectral space in case spectral transmittances or reflectances are used. It will be readily appreciated that in this case it is necessary to calculate the at least one second color values, for example, cᵢ, mᵢ, yᵢ, in a second color space that is different from the first color space, based on the color values of the original image in the first color space, as well as the ink coverages (and, optionally, color separation) that have to be used to reproduce the at least one second color values.

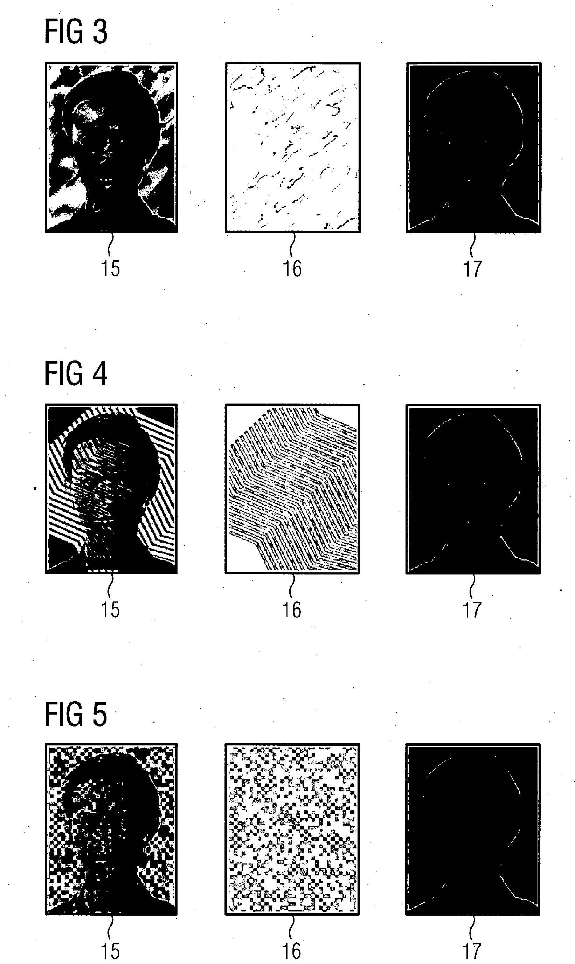

Figs. 3 to 5 show specific examples of advantageous configurations of first image 16 that allow for obscuring personalized input image 17. For example, as shown in Fig. 3, the first plurality of pixels in first image 16 may form a camouflage pattern. As can be seen in Fig. 3, this results in obscuring personalized output image 15 to a large extent. The same applies to the broken-line pattern in Fig. 4, and the random pixel pattern in Fig. 5. In any of the above examples, the at least one first color values of the first plurality of pixels in first image 16 may be configured to form a shaded region, in particular, at a center of first image 16. While this is not shown in the figures, it will be appreciated that such a shaded (i.e., darkened or brightened) region in the center of first image 16 results in that the most prominent facial features (eyes, nose, etc.) in personalized input image 17 are further obscured.

As also already mentioned above, the security of personalized output image 15 may be further increased by providing an additional layer having a pattern 22, the layer being provided in or on at least page 14B1, and the pattern 22 including a fourth plurality of pixels, positions of the fourth plurality of pixels corresponding to positions of the first plurality of pixels in first image 16. In such a case, the at least one third color value of each of the third plurality of pixels in personalized output image 15 is further calculated based on at least one color value of the corresponding one of the fourth plurality of pixels. In other words, the color value cᵥ is calculated such that the sum of cᵥ, cᵣ and a value cₚ of the pixel in pattern 22 results in the desired value cᵢ of personalized input image 17. In some examples, pattern 22 may, for example, be a watermark that is provided in at least one page 14B1 between first side S1 and second side S2, with the watermark having a known property (i.e., color values).

Fig. 6 shows an example for the color gamuts of the cyan ink in the first image 16 (cᵣ) and the image that is visible in transmission, i.e., personalized input image 17 (cᵢ). In principle, as shown in Fig. 6, the available gamut is described by the relations 0% < cᵢ < 100% + cᵣ and 0% < cᵣ <cᵢ. In other words, for each value cᵣ in first image 16, the range that is obtainable in principle for the image that is recognizable in transmission (i.e., personalized input image 17) is between cᵣ and cᵣ + 100%. However, as explained above, it is desirable that the color values in first image 16 and personalized input image 17 can be selected independently from each other. Therefore, the color gamut is limited, as indicated by the dashed line in Fig. 6. As explained above, if the color values cᵣ in first image 16 cover a given range (indicated by the vertical dashed line in Fig. 6), the color values in personalized input image 17 should be such that their lower limit is the maximum color value of first image 16. Likewise, the upper limit of the color value range for personalized input image 17 should be 100% plus the minimum color value of the color values in first image 16.

It will be appreciated that the calculations described above for the ink amounts cᵣ, cᵢ and cᵥ can, of course, also be performed in other color spaces, for example, by converting the values cᵣ, cᵢ and cᵥ to values Rᵣ, Rᵢ and Rᵥ, for example, in the RGB color space. Here, it will be appreciated that generally the color values R can be obtained via the simple relationship R = 1 - c. in a similar manner, G = 1 - m and B = 1 - y. The mapping of color values between the CMY color space and the RGB color space (or any other color space that is commonly used) is well-known, such that a detailed description will be omitted. In any case, Fig. 7 shows that the above-described conditional gamut can also be obtained in any other color space, for example, the RGB color space, with the value of R for a given image ranging between 0 and 1 (or, in another commonly used notation, 0 and 255).

It will be appreciated that, in some embodiments, the above-described method may further comprise an optional step of forming (i.e., printing) the generated personalized output image on a page of security document 10, in order to obtain a personalized security document. Such a (personalized) security document 10 comprises at least one page 14B1 having a first side S1 and second side S2, first (fixed or variable) image 16 formed on one of first side S1 and second side S2, and personalized image 15 generated in accordance with the above-described method formed on the other one of first side S 1 and second side S2.

As shown in Fig. 8, the above-described personalization of security document 10 can be achieved using a printing apparatus 100, preferably an ink printing apparatus, comprising a printing unit 104 and a control unit 106 configured to perform the above-described method. In particular, control unit 106 is configured to control printing unit 104 to print the generated personalized output image 15, in particular, in registration with first image 16. In some embodiments, first image 16 may also be printed by printing apparatus 100 during personalization of security document 10. In this respect, it may be advantageous that first image 16 is not the same image for all security documents that are formed in the above-described manner, but different for each document. For example, first image 16 may be randomly generated, and personalized output image 15 may be calculated on the basis of this randomly generated (fixed) image, using personalized input image 17. In this manner, it will be much more difficult, if not impossible, to forge security document 10, because a forger has no knowledge of the properties of a particular first image 16 of a given document.

It should be appreciated that, in the foregoing, the ideal case of a highly diffusive sheet and ink amounts that are neither too large nor too low has been described. However, it will be appreciated that any modifications that are necessary in view of, for example, the properties of the used paper or the like are straightforward for the skilled person. For example, the ink amounts on either first side S1 or second side S2 may be multiplied by appropriate factors in order to obtain the desired total ink amounts. In other cases, the (perhaps fixed) lighting conditions that are used to view personalized output image 15 may also be considered, i.e., the amount of light that hits second side S2, and the amount of light that hits first side S1 when page 14B1 is viewed from first side S1 in transmission. Such adaptions are well-known to the skilled person, such that a detailed description will be omitted.

### Industrial applicability

With the above-described teachings, a secure personalized image to be used, for example, for a passport or any other security document can be obtained, which personalized image is obscured when viewed under reflection, but becomes visible when being viewed in registration with a first image formed on the opposite side of the page in transmission. While the above example was described with respect to a booklet-type passport, it will be appreciated that the same concept can be applied to any security document that includes at least one sheet or page. Further, while the case of paper pages was described, it will be appreciated that any other appropriate material can be used. In some cases, it may even be possible to use, for example, a polycarbonate substrate with a clear or translucent window, where the respective images can be formed on opposite sides of the same in a known manner. Also in this case, it is possible to include a further layer or watermark inside the sheet, for example, by printing onto said layer prior to lamination of the sheet.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. A method of generating a personalized output image (15) for a security document (10) including at least one page (14B1), the at least one page (14B1) having a first side (S1) and an opposite second side (S2), the method comprising:
acquiring image information of a first image (16) formed or to be formed on one of the first side (S1) and the second side (S2) of the at least one page (14B1);
determining at least one first color value (cᵣ, mᵣ, yᵣ) of each of a first plurality of pixels in the first image (16);
receiving a personalized input image (17);
performing a registration between the personalized input image (17) and the first image (16);
determining at least one second color value (cᵢ, mᵢ, yᵢ) of each of a second plurality of pixels in the personalized input image (17), positions of the second plurality of pixels in the personalized input image (17) corresponding to positons of the first plurality of pixels in the first image (16); and
calculating at least one third color value (cᵥ, mᵥ, yᵥ) of each of a third plurality of pixels in the personalized output image (15) based on corresponding ones of the at least one first color values (cᵣ, mᵣ, yᵣ) and the at least one second color values (cᵢ, mᵢ, yᵢ) such that the personalized output image (15), when formed on and viewed in transmission from the other one of the first side (S1) and the second side (S2) of the at least one page (14B1) in registration with the first image (16), resembles the personalized input image (17).

2. The method of claim 1, wherein the at least one third color value (cᵥ, mᵥ, yᵥ) of each of the third plurality of pixels is obtained by subtracting the corresponding at least one first color value (cᵣ, mᵣ, yᵣ) from the corresponding at least one second color value (cᵢ, mᵢ, yᵢ).

3. The method of claim 1 or 2, further comprising:
acquiring a first maximum color value of the at least one first color values (cᵣ, mᵣ, yᵣ) in the first image (16);
determining a color value range for the at least one third color values (cᵥ, mᵥ, yᵥ) in the personalized output image (15) by setting a lower limit of the color value range to the first maximum color value; and
determining the at least one second color values (cᵢ, mᵢ, yᵢ) in the personalized input image (17) by mapping color values of the personalized input image (17) onto the determined color value range.

4. The method of claim 3, further comprising:
determining a first minimum color value of the at least one first color values (cᵣ, mᵣ, yᵣ) in the first image (16); and
setting an upper limit of the color value range to a sum of the first minimum color value and a maximum obtainable color value for the personalized output image (15).

5. The method of any one of claims 1 to 4, wherein
the first image (16) and the personalized output image (15) are formed by printing using at least one ink, and
the at least one first color value (cᵣ, mᵣ, yᵣ) and the at least one third color value (cᵥ, mᵥ, yᵥ) are related to at least one ink amount of the at least one ink, the at least one ink amount being between a minimum ink amount of 0% and a maximum ink amount of 100%.

6. The method of claim 5, wherein the at least one first color value (cᵣ, mᵣ, yᵣ) and the at least one third color value (cᵥ, mᵥ, yᵥ) represent the at least one ink amount of the at least one ink to be used for printing.

7. The method of any one of claims 1 to 6, further comprising obtaining color values of the personalized input image (17) in a first color space, and calculating the at least one second color values (cᵢ, mᵢ, yᵢ) in a second color space based on the obtained color values.

8. The method of claim 7, wherein the first color space is the RGB color space and the second color space is the CYM color space.

9. The method of any one of claims 1 to 8, wherein the at least one first color values (cᵣ, mᵣ, yᵣ) of the first plurality of pixels in the first image (16) form one of a camouflage pattern, a line pattern, and a random pixel pattern.

10. The method of claim 9, wherein the at least one first color values (cᵣ, mᵣ, yᵣ) of the first plurality of pixels in the first image (16) are configured to form a shaded region at a center of the first image (16).

11. The method of any one of claims 1 to 10, wherein a layer having a pattern (22) is provided in or on the at least one page (14B1), the pattern (20) including a fourth plurality of pixels, positions of the fourth plurality of pixels corresponding to positons of the first plurality of pixels in the first image (16),
wherein the at least one third color value (cᵥ, mᵥ, yᵥ) of each of the third plurality of pixels in the personalized output image (15) is further calculated based on at least one color value of a corresponding one of the fourth plurality of pixels.

12. The method of claim 11, wherein the pattern (22), for example, a watermark, is provided in the at least one page (14B1) between the first side (S1) and the second side (S2).

13. The method of any one of claims 1 to 12, wherein the at least one color values (cᵣ, mᵣ, yᵣ; cᵢ, mᵢ, yᵢ; cᵥ, mᵥ, yᵥ) each include three individual color values, and the respective method steps are performed separately for each individual color value.

14. A security document (10), comprising:
at least one page (14B1) having a first side (S1) and a second side (S2);
a first image (16) formed on one of the first side (S1) and the second side (S2); and
a personalized image (15) generated in accordance with any one of claims 1 to 13 formed in registration with the first image on the other one of the first side (S1) and the second side (S2), the personalized image (15) and the first image (16), when viewed in transmission from one of first side (S1) and second side (S2), resembling a portrait of a holder of the security document.

15. A printing apparatus (100), preferably an ink printing apparatus, comprising;
a printing unit (104); and
a control unit (106) configured to perform the method of any one of claims 1 to 13,
wherein the control unit (106) is further configured to control the printing unit (104) to print the generated personalized output image (15) and, optionally, the first image (16) in registration with each other.
